# EUROPEAN PATENT APPLICATION

(11) **EP 1 587 037 A1**
(43) Date of publication of application: **19.10.2005**
(21) Application number: 04006257.2
(22) Date of filing: 16.03.2004
(51) Int. Cl.: G07F 7/10

(54) **Method and system for storing and accessing data**

(71) Applicant: Infineon Technologies AG, 81669 München (DE)
(72) Inventor: Björklund, Gunnar, 13554 Tyresö (SE)
(74) Representative: Epping - Hermann - Fischer

(57) **Abstract**

A secure method of storing and accessing data in a protected electronic memory is described. The method comprises generating a cipher key having a predetermined length equal to the length of data to be encrypted. A bit-wise XOR operation is performed on each data bit to be encrypted and a corresponding cipher key bit. The result is stored in a corresponding bit position in a protected electronic memory. Accessing of selected bits of the protected electronic memory is performed by making a bit-wise XOR operation on each data bit to be accessed and the corresponding cipher key bit. To implement a one-time cipher the cipher key bits used for accessing the selected bits are regenerated and a second bit-wise XOR operation on each of the accessed data bits is then performed. The new result is stored in the corresponding bit position in the protected electronic memory. A system for implementing the method is also described.

## Description

### FIELD OF INVENTION

The present invention relates generally to a method and a system for storing and accessing data in a protected electronic memory, particularly in a chip card.

### BACKGROUND

Current protection of data involves encryption and decryption using different cipher techniques commonly based on RSA or similar ciphers and involving exchange of public keys for encryption. A prior art problem is that these techniques are relatively slow which often makes it necessary to decrypt long strings of data in a batch operation. This in turn means that a whole memory area is decrypted in one operation, although only a minor part of the stored data is necessary for computational purpose. This often leaves large amounts of data unnecessarily decrypted and therefore also open for unauthorised access until the next encryption session of the data takes place.

Another problem is the necessity also to protect the electronic memory inside a user's local device, e.g., a mobile phone or chip card, from attempts to copy encrypted data. Such copied data can then be downloaded into an identical device for unauthorised access to cash machines, web services or similar.

Therefore a memory containing encrypted data must be protected for all operations except when authorised access occurs for the decryption of data using a cipher key, which is assumed to be downloaded via a secure link from a safe remote location.

### SUMMARY OF THE INVENTION

An object of the present invention is to provide a method and a system of the kind initially mentioned wherein the drawbacks of prior art are eliminated or at least mitigated, i.e., a method of storing and accessing data in an electronic memory which is fast and secure and a system for performing the method. Another object is to provide a method and a system of storing and accessing data which makes copying of data difficult.

The invention is based on the realisation that the above objects can be attained by protecting all data by a cipher of the one-time type called the Vernam Cipher, wherein both the cipher and the cipher key are regenerated after decryption. According to a first aspect of the present invention there is provided a method of storing and accessing data in a protected electronic memory as defined in appended claim 1. According to a second aspect of the present invention there is provided a system for storing and accessing encrypted data as defined in appended claim 9.

By using the Vernam Cipher for encryption of plain text data bit-by-bit into an electronic memory using the logical XOR operation, the memory is protected in such a way that the only possible way to decrypt the content, or even a single bit of information in the memory, is to get access to the cipher key itself. The cipher key is therefore protected, which is achieved by the update of the cipher key, preferably followed by upload via a secure link to a remote location, e.g. to the server of a service provider.

By using the inventive method, the requirement of accessing large portions of encrypted data is eliminated. Instead, only the data of interest need to be decrypted. This provides for an efficient and fast encryption and decryption of data.

In a preferred embodiment, in order for the cipher to be intact after decryption, the part of the cipher key used for the encryption of data is regenerated via a pseudo random code.

In a preferred embodiment, a system is provided for protection of the encrypted data based on exchange of cipher keys between a remote cipher protection device and a local cipher protection device. The local device is preferably an integrated part of a digital CMOS chip, which means that the encrypted data is only accessed via the I/Os of the chip involved in the logical XOR processing of the encrypted data. In an alternative embodiment the protected data of a specified memory area is uploaded to a remote cipher protection device where deciphering is taking place and also the regeneration of the cipher key and reencryption of the data is taking place before downloading takes place to the PMA.

In a preferred embodiment, in order to avoid copying of the memory data content, a header protected cipher key is used, where the header includes a password only known to the remote cipher protection device and the local cipher protection device and which is automatically changed each time the header and the cipher key are updated.

Further preferred embodiments are defined by the dependent claims.

### BRIEF DESCRIPTION OF DRAWINGS

The invention will now be described, by way of example, with reference to the accompanying drawings, in which:
Fig. 1 shows a chip card and a bank cash machine connected to a Bank Server embodying the present invention;
Fig. 2 shows hardware used for storage of encrypted data according to the invention;
Fig. 3 shows the hardware of Fig. 2 used for accessing encrypted data according to the invention;
Fig. 4 is a flow diagram of the steps of storing and accessing data according to the invention;
Fig. 5 shows a transaction session between a user and a remote service provider;
Fig. 6 is a flow diagram of the steps of protecting encrypted data from copying;
Fig. 7 shows the use of a short range RF link in form of a Wireless Mobile Terminal connected via a radio link over a cellular radio network to a Bank Server and,
Fig. 8 shows an alternative embodiment of a chip card and a bank cash machine embodying the present invention.

### DETAILED DESCRIPTION OF THE INVENTION

In the following a detailed description of preferred embodiments of the present invention will be given.

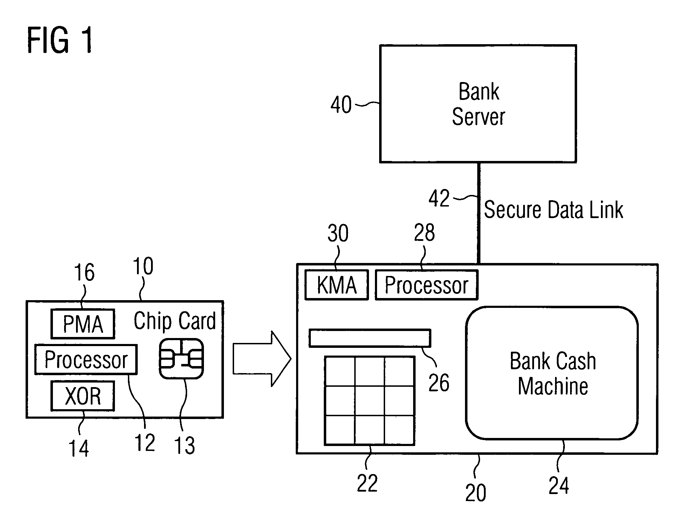

In Fig. 1, a Chip Card (10), is shown before insertion into a bank cash machine. Chip cards are commonly used for access to cash machines for Internet transactions etc. and one such cash machine 20 is shown in the figure. Chip cards can also be used as SIM cards for mobile terminals, such as mobile phones etc.

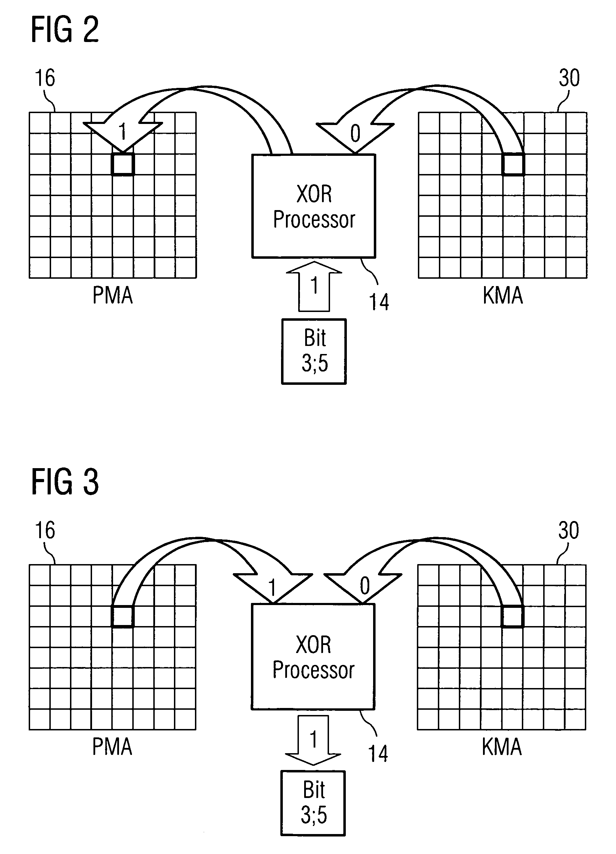

The chip card (10) comprises a device 13 for connecting the electrically to the bank cash machine and also a processor 12 controlling the operation of the chip card (10). The chip card also contains an electronic memory comprising a protected memory area (PMA) 16 for storage of encrypted data, such as user identification, transaction data etc. Data stored in the PMA 16 must resist any attempts to extract or misuse the data, although part of the PMA may store plain text as well. To this end, the processing means comprises an eXclusive-OR (XOR) processor 14 used for the encryption and decryption operations as will be described below under reference to Figs. 2 and 3.

The cash machine 20 comprises means conventionally found in such devices, such as a keypad 22, a display 24, and a slot 26 for reception of the chip card 10. It also comprises a processing means 28 and an electronic memory comprising a key memory area (KMA) 30 for storage of a cipher key. When the chip card 10 is inserted in the cash machine 20, data can be exchanged between the chip card and the cash machine. As an example, the chip card can be used for authentication purposes during an electronic banking transaction. The cash machine 20 is connected by means of a secure link 42 to a service provider in the form of a bank server 40 located in protected premises.

Examples of a PMA 16 and a KMA 30 are shown in more detail in Fig. 2. They are identical in size and comprise bit positions in a MxN matrix of 8 rows times 8 columns. Thus, the 5^{th} position of the 3^{rd} row in the PMA correspond to the same bit position in the KMA.

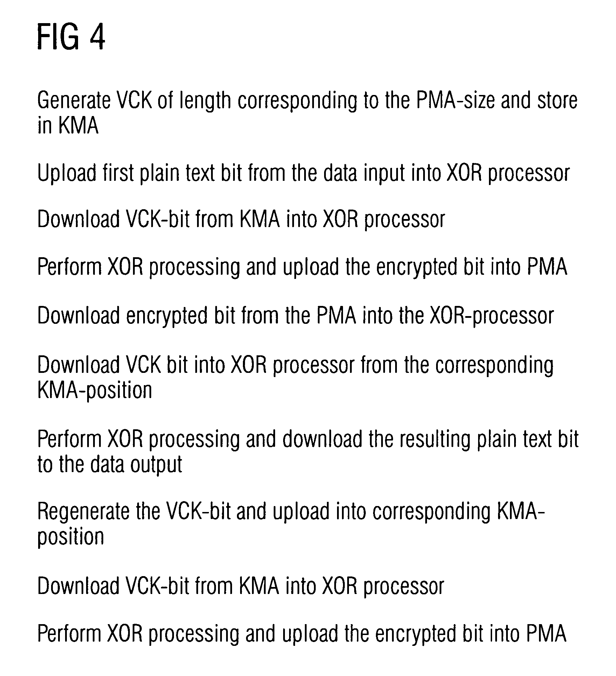

The PMA is arranged for storing encrypted data comprising 8x8, i.e., 64 bits. A Vernam Cipher Key (VCK) used for encryption of this data is stored in the KMA and this key has the same length as the encrypted data. The XOR processor 14 is used for the storing and accessing procedures as will be explained in the following with reference to Figs. 1-4.

A cipher key VCK having the same length as the data to be encrypted is generated, step 110. The cipher key, which is stored in the KMA, is generated via a pseudo random code, preferably by means of a pseudo random clock generating a "0" 50% of the times and a "1" the other 50%. In step 115, a first plain text bit is uploaded from a data input and input into the XOR processor 14. Next, in step 120 a cipher key bit is downloaded from KMA into the XOR processor and an XOR operation is performed and the resulting bit is uploaded into PMA, step 125.

The cipher key is now a real one-time key as it has only been used to encrypt the PMA content. The cipher key can now be used once in the following way.

In step 130, the encrypted bit is downloaded from the PMA into the XOR processor and the corresponding cipher key bit is downloaded from the KMA, step 135. An XOR operation is then performed and the resulting plain text bit is sent to the data output, (see also Fig. 3).

The cipher key has now been used once and must be regenerated. This is done in step 145 for the used cipher key bit and the regenerated bit is uploaded into the corresponding KMA position. The PMA must be updated accordingly and in step 150 the cipher key bit is downloaded into the XOR processor together with the decrypted bit. An XOR operation is performed in step 155 and the new encrypted bit is uploaded into PMA. Thanks to the cipher key update at each bit access cycle, the PMA is completely protected by the cipher key.

Assume that there is an 8 bit data word to be encrypted: 01011100. Assume that the following 8 bit cipher key is generated: 11010100. The data word and the cipher key could for example correspond to the bits shown in the 3^{rd} row of the PMA and the KMA, respectively.

This generates the following operations:
01011100 (plain text)
11010100 (cipher key)
10001000 (encrypted data)

The cipher allows for bit-by-bit coding using a cipher key of the same length as the plain text. Referring to the example shown in Fig. 2, the KMA (3;5) bit is combined with a plain text bit in the XOR processor 14 to provide a new encrypted PMA (3;5) bit, in the present example "1".

Continuing the example, a bit-by-bit XOR operation between the cipher key and the encrypted data word yields the following:
10001000 (encrypted data)
11010100 (cipher key)
01011100 (plain text)

In Fig. 3 there is shown how the data in the PMA 16 is accessed. Assuming that for computation purpose access to the memory bit in the position PMA(3;5) is needed, the corresponding bit in the same position in the KMA memory is read into the XOR processor. This provides the plain text bit shown in fig. 3, i.e., "1".

This decryption scheme operates in such a way that only one bit is decrypted and read at a time.

Since after decryption the plain text is available, the protection of the PMA is broken and a new encryption of the decrypted bits must be made in order not to violate the one-time cipher character of the data protection method according to the invention. The only possible way to decrypt the content or even a single bit of information in the PMA is to get access to the cipher key itself, for which the system obviously must offer a very high degree of protection. This means that the KMA and the PMA preferably are located in two physically separated devices in such a way that any attempt of eavesdropping of the transferred information between the two memory areas is prohibited. The arrangement shown in Fig. 1 must be designed to this end, i.e., the KMA must be protected in the best possible way and also the communication between the chip card 10 and the cash machine 20 should be protected from eavesdropping.

When the chip card 10 is inserted in the slot 26 of the cash machine, it becomes electrically connected and activated. As soon as the user has completed a password authorisation, the cipher key is downloaded via a secure link 42 from the bank's cash machine server 40 into the KMA. In step 160, the PMA is then XOR-decrypted bit-by-bit as described above and in step 170 the result of the second XOR operation is stored in the corresponding bit position in the PMA. As soon as all transactions are terminated, the updated cipher key is sent back to the bank via the secure link 42. The encrypted data stored in the PMA can only be decrypted with the updated cipher key, which now can only be accessed via the bank's protected cash machine server 40.

It is necessary also to protect the PMA inside the chip card 10 from attempts to copy the encrypted data. Such copied data could then be downloaded into an identical PMA-based device for unauthorised access to cash machines, web services or similar. There is thus a possibility to access the PMA via the XOR processing unit and to bit-by-bit copy the encrypted data of the PMA using an arbitrary binary key for the XOR encryption of the encrypted data. It is then possible to XOR-decrypt the captured data outside the chip card 10 using the same binary key. This will result in a copy of the stored encrypted data in the PMA with the possibility to upload an identical encrypted data in the PMA of another equivalent mobile device for the purpose of misuse or fraud.

To avoid this, a system for protection of the PMA is provided which is based on exchange of cipher keys between a remote cipher protection device (RCPD) and a local cipher protection device (LCPD). The local device is preferably an integrated part of a digital CMOS chip, which means that the PMA only is accessed via the I/Os of the chip involving the logical XOR processing of the encrypted data.

In order to avoid copying of the PMA data content, a header protected cipher key (H-VCK) is provided where the header includes a password only known to the local device and the remote device. The password may also comprise a PIN code entered by a user before each session begins.

In order to further increase security, the header preferably also comprises a variable portion which is changed after each session.

The header can be provided in any suitable place in the memories. This means that it is very difficult for a fraudulent person to locate the header.

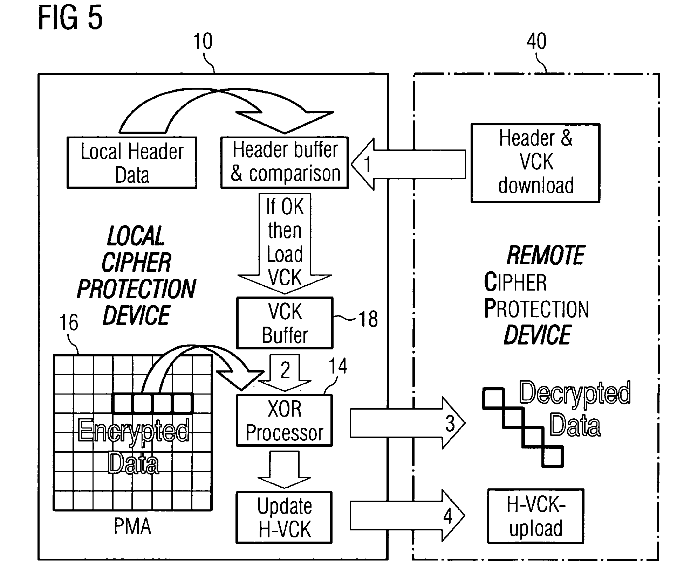

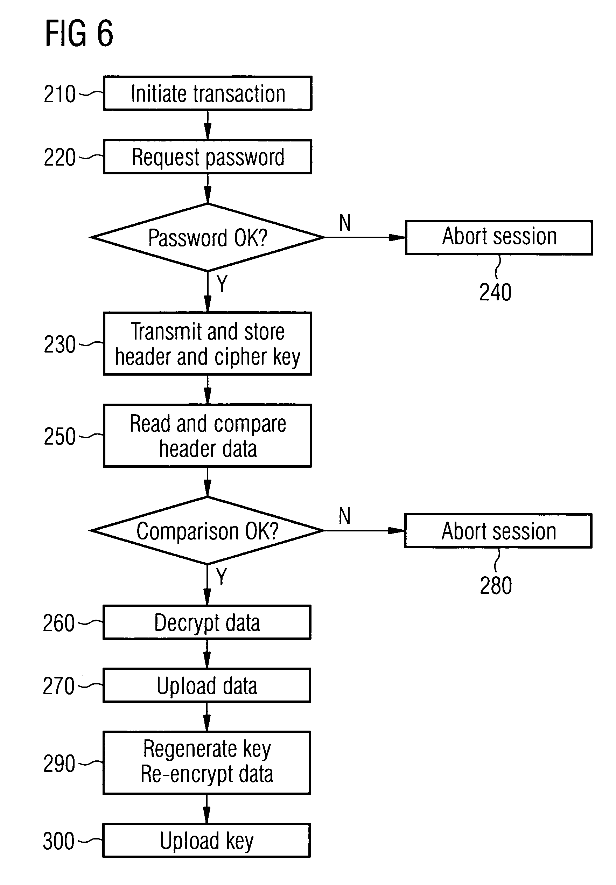

A transaction session between the local device and the remote device will now be described step by step under reference to Figs. 5 and 6 wherein the local device is the chip card 10 and the remote device is the bank server 40. A user initiates a transaction over a secure link to the remote service provider 40, step 210. The service provider requests the password of the user, step 220. If the password is correct, the service provider then transmits the header followed by the cipher key (arrow 1 in Fig. 5), step 230, which is captured by the LCPD and stored in a buffer memory 18. If the password is not correct, the session is instead aborted, step 240.

The received header data is read and compared with the local header data, step 250. If the comparison confirms that the buffered header is identical with the local header in the LCPD an OK is given to proceed with the XOR processing (arrow 2 in Fig. 5) of the PMA using the cipher key stored in the buffer memory, step 260. The encrypted data of the PMA is then decrypted and uploaded via the secure link to the RCPD (arrow 3 in Fig. 5) for authentication and authorisation of the requested service from the remote server, step 270.

If the comparison determines that the buffered header is not identical with the local header, the session is aborted, step 280.

It is necessary to update the one-time cipher key at the end of the transaction session since it is only allowed to use the cipher key once. The PMA memory's encrypted data is therefore re-encrypted by the updated cipher key using the bit-by-bit XOR processing method as described above with reference to Figs. 1-4, step 290. The updated cipher key is then uploaded to the remote server via the secure link together with the similarly updated header (arrow 4), step 300. The updated H-VCK is now replacing the old H-VCK at the remote site of the service provider and is therefore only accessible from the server as we have already described.

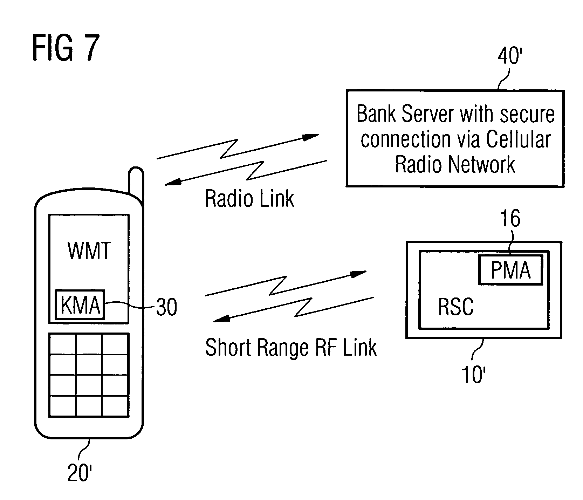

A second embodiment is shown in fig. 7 where the chip card is replaced by an RF connected Smart Card (RSC) 10'. Data transfer to and from a Wireless Mobile Terminal (WMT) 20' is only feasible when the encrypted Short range RF link to the remote server 40' is in operation. The cipher key is then downloaded via a secure link from the remote server location to the KMA of the wireless terminal 20'. Access to the encrypted data in the PMA of the remote server is taking place in the same way as we have shown above. Protected transactions can now be performed, e.g. with a remote service provider and with the wireless terminal acting as hub for the remote server. All transactions are executed with total one-time cipher protection via the wireless terminal, which means that there is now total protection of the encrypted data stored in the PMA during the whole transaction session.

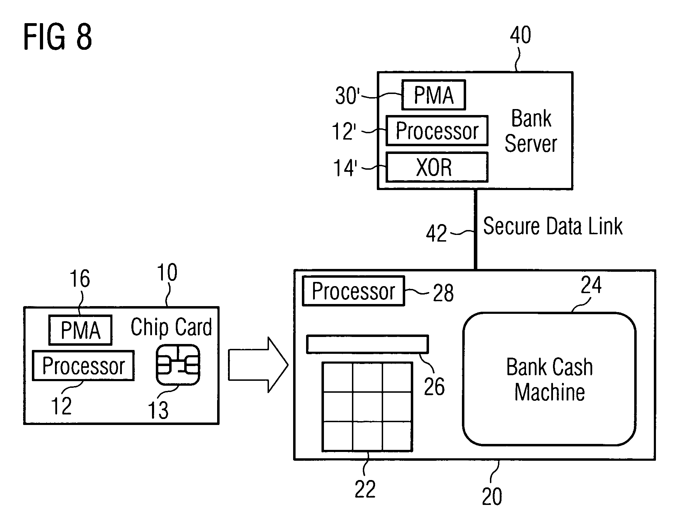

In an alternative embodiment, instead of making the XOR-operation in the chip card, the protected data of the PMA is uploaded to a remote cipher protection device. This is shown in Fig. 8, wherein the processing means 12' including the XOR processor 14'and the KMA 30' are are provided in the server 40, where deciphering takes place. This means that instead of transferring unencrypted data between the chip card 10 and the cash machine 20, encrypted data is transferred, adding a further level of security. This means that also the regeneration of the cipher key and reencryption of the data takes place in the server 40. The data is encrypted before downloading takes place to the PMA 16 provided in the chip card.

Preferred embodiments of a method and a system according to the invention have been described. A person skilled in the art realises that these could be varied within the scope of the appended claims.

The KMA and the PMA have been described as being located in two physically separated devices. It will be appreciated that the cipher key also can be protected in other ways, such as by encryption of the cipher key itself. It will also be appreciated that the size of the KMA and the PMA has been given as a simplified example and that these memories are organized in a more complex way.

Regeneration of the cipher key has been described as taking place either after the access of each bit or after each session. Regeneration can also be scheduled in other ways, such as after a predetermined number of bits have been accessed.

The PMA has been described as provided in a chip card and the KMA in a bank cash machine. It will be appreciated that the PMA and the KMA could be provided in other kinds of separate devices which communicate with each other, such as a key and lock device.

## Claims

1. A method of storing and accessing data in a protected electronic memory provided in a first device, comprising the following steps:
- generating a cipher key (VCK) having a predetermined length equal to the length of data to be encrypted;
- making a bit-wise XOR operation on each data bit to be encrypted and a corresponding cipher key bit;
- storing the result of the XOR operation in a corresponding bit position in the protected electronic memory (16);
- accessing selected bits of the protected electronic memory by making a bit-wise XOR operation on each data bit to be accessed and the corresponding cipher key bit;
- regenerating the cipher key bits used for accessing the selected bits of the protected electronic memory;
- making a second bit-wise XOR operation on each of the accessed data bits corresponding cipher key bits; and
- storing the result of the second XOR operation in the corresponding bit position in the protected electronic memory.

2. The method according to claim 1, wherein the cipher key is generated in a separate device (20; 40) from the device (10) in which the result of the XOR operating is stored.

3. The method according to claim 2, comprising the additional step of downloading the cipher key to the first device after the step of generating or regenerating the cipher key.

4. The method according to claim 3, comprising the additional step of generating a cipher key header (HVCK) which is downloaded together with the cipher key.

5. The method according to claim 4, wherein the header comprises a password, preferably a PIN code, which is compared to a password input into the first device.

6. The method according to claim 4, wherein the header comprises a variable header which is compared to a corresponding variable header stored in the first device.

7. The method according to claim 2, wherein the step of making a bit-wise XOR operation is preceded by a step of uploading the encrypted data to the separate device (20; 40) and wherein the XOR operation is performed in the separate device.

8. The method according to any of claims 1-7, wherein the cipher key is generated by means of a pseudo random code.

9. A system for storing and accessing encrypted data, comprising:
- means (40) for generating a cipher key (VCK) having a predetermined length equal to the length of data to be encrypted;
- means (14) for making a bit-wise XOR operation on each data bit to be encrypted and a corresponding cipher key bit;
- means (16) for storing the result of the XOR operation in a corresponding bit position in the protected electronic memory (16);
- means (14) for accessing selected bits of the protected electronic memory by making a bit-wise XOR operation on each data bit to be accessed and the corresponding cipher key bit;
- means (40) for regenerating the cipher key bits used for accessing the selected bits of the protected electronic memory;
- means (14) for making a second bit-wise XOR operation on each of the accessed data bits corresponding cipher key bits; and
- means (16) for storing the result of the second XOR operation in the corresponding bit position in the protected electronic memory.

10. The system according to claim 9, comprising a chip card (10) in which the encrypted data is stored.

11. The system according to claim 9 or 10, wherein the means for generating a cipher key comprises a server (40), preferably a bank server connected to a bank cash machine (20).

12. The system according to any of claims 9-12, wherein the means (14) for making a bit-wise XOR operation is provided in a chip card (10).

13. The system according to any of claims 9-12, wherein the means (14) for making a bit-wise XOR operation is provided in a device (20; 40) separate from the device (10) in which the means (16) for storing the result of the XOR operation is provided.

14. The system according to any of claims 1-13, comprising a wireless terminal (20') having means (30) for storing the cipher key.
